# EUROPÄISCHE PATENTANMELDUNG

(11) **EP 4 708 229 A1**
(43) Veröffentlichungstag der Anmeldung: **11.03.2026**
(21) Anmeldenummer: 24199156.1
(22) Anmeldetag: 09.09.2024
(51) Int. Cl.: G06V 20/80, G06Q 10/087, G06T 7/00

(54) **VERFAHREN ZUM ERZEUGEN EINES DATENSATZES ZUM IDENTIFIZIEREN VON HOLZWERKSTOFFPLATTEN UND VERFAHREN ZUM IDENTIFIZIEREN VON HOLZWERKSTOFFPLATTEN**

(71) Anmelder: Fritz Egger GmbH & Co. OG, 6380 St. Johann in Tirol (AT)
(72) Erfinder: Ruhm, Markus, 3062 Kirchstetten (AT)
(74) Vertreter: Cohausz & Florack

(57) **Zusammenfassung**

Die Erfindung betrifft ein Verfahren zum Erzeugen eines Datensatzes zum Identifizieren von Holzwerkstoffplatten, bei dem mindestens zwei Holzwerkstoffplatten, insbesondere mehrere Holzwerkstoffplatten ein Plattenpaket bilden, bei dem zumindest ein digitales Bild von einem Teil des Plattenpakets mit Abschnitten der Seitenkanten der Holzwerkstoffplatten aufgenommen wird, bei dem Bildausschnitte aus dem digitalen Bild mit den Abschnitten der einzelnen Seitenkanten ermittelt werden, bei dem ein Vergleichsdatensatz für jeden Bildausschnitt anhand der Struktur der Holzwerkstoffelemente ermittelt wird, bei dem der Vergleichsdatensatz jeder Holzwerkstoffplatte gespeichert wird und bei dem mindestens eine Information zu der jeweiligen Holzwerkstoffplatte und zu dem jeweiligen Plattenpaket mit dem Vergleichsdatensatz jeder Holzwerkstoffplatte verknüpft und in einer Datenbank gespeichert werden. Zudem betrifft die Erfindung ein Verfahren zum Identifizieren einer Holzwerkstoffplatte.

## Beschreibung

Die Erfindung betrifft ein Verfahren zum Erzeugen eines Datensatzes zum Identifizieren von Holzwerkstoffplatten und ein Verfahren zum Identifizieren von Holzwerkstoffplatten.

Holzwerkstoffplatten, insbesondere Spanplatten, OSB-Platten (oriented strand board - OSB) oder Faserplatten wie beispielsweise HDF-Platten (High Density Fibre - HDF) oder MDF-Platten (Medium Density Fibre - MDF) werden großtechnisch hergestellt. Die bei der Herstellung vorliegenden Herstellungsparameter wie die Art der Aufbereitung und Herkunft des eingesetzten Holzes mit Holzwerkstoffelementen wie Spänen oder Fasern und mit Größenverteilungen der Holzwerkstoffelemente, die Art der verwendeten Bindemittel und ggf. Zusatzstoffe, die Prozesstemperaturen und Prozessdrücke sind kritische Parameter für die Qualität der Holzwerkstoffplatten. Dazu kommen logistische Informationen wie Herstellungsdatum, Herstellungsort, Transportwege und Lagerstätten.

Durch die zunehmende Vernetzung der Vertriebswege und die zunehmenden Anforderungen an Qualitäts- und Herkunftsnachweise ist es wünschenswert, jeder einzelnen Holzwerkstoffplatte die Herstellungsparameter und die logistischen Informationen zuordnen zu können.

Aus dem Stand der Technik der WO 2022/223563 A1 ist bekannt, durch einen Algorithmus, der auch zumindest teilweise durch eine künstliche Intelligenz ausgeführt wird, die Struktur einer Seitenkante einer Holzwerkstoffplatte für deren eindeutige Identifikation zu nutzen. Dazu wird die Struktur der Seitenkante auf der Basis der Geometrie, der Topographie und/oder der Verteilung der Holzwerkstoffelemente wie Späne oder Fasern mit einem digitalen Bild erfasst und ausgewertet.

Der sich daraus ergebende Datensatz wird als Vergleichsdatensatz in einer Datenbank gespeichert. Dann kann, wenn zu einem späteren Zeitpunkt die Seitenkante derselben Holzwerkstoffplatte aufgenommen wird, mit einem aus diesem Bild ermittelten Prüfdatensatz ein Vergleich angestellt werden. Ergibt der Vergleich eine Übereinstimmung zwischen dem Prüfdatensatz und einem der gespeicherten Vergleichsdatensätze, dann kann die Holzwerkstoffplatte identifiziert werden. Somit können über eine Identifizierung hinaus der identifizierten Holzwerkstoffplatte auch weitere Informationen zur Charakterisierung zugeordnet werden, die die Eigenschaften der Holzwerkstoffplatte, die Herstellungsdaten und andere Information beinhalten können.

Das Erstellen des digitalen Bildes der Seitenkante der Holzwerkstoffplatten im Zuge der Herstellung der Holzwerkstoffplatte erfordert ein Anhalten der Holzwerkstoffplatte gegenüber der eingesetzten Kamera oder zumindest ein definiertes Führen oder Ausrichten. Des Weiteren können störende Verschmutzungen in Bereichen der Manipulation der Holzwerkstoffplatten verstärkt auftreten, wodurch die Qualität der Bilder beeinträchtigt werden kann und fehlerhafte Ergebnisse auftreten können.

Daher liegt der vorliegenden Erfindung die Aufgabe zugrunde, das Identifizieren von Holzwerkstoffplatten weiter zu verbessern und zu vereinfachen.

Die zuvor aufgezeigte Aufgabe wird erfindungsgemäß durch ein Verfahren zum Erzeugen eines Datensatzes zum Identifizieren von Holzwerkstoffplatten gelöst,
- bei dem mindestens zwei Holzwerkstoffplatten, insbesondere mehrere Holzwerkstoffplatten ein Plattenpaket bilden,
- bei dem zumindest ein digitales Bild von einem Teil des Plattenpakets mit Abschnitten der Seitenkanten der Holzwerkstoffplatten aufgenommen wird,
- bei dem Bildausschnitte aus dem digitalen Bild mit den Abschnitten der einzelnen Seitenkanten ermittelt werden,
- bei dem ein Vergleichsdatensatz für jeden Bildausschnitt anhand der Struktur der Holzwerkstoffelemente ermittelt wird,
- bei dem der Vergleichsdatensatz jeder Holzwerkstoffplatte gespeichert wird und
- bei dem mindestens eine Information zu der jeweiligen Holzwerkstoffplatte und zu dem jeweiligen Plattenpaket mit dem Vergleichsdatensatz jeder Holzwerkstoffplatte verknüpft und in einer Datenbank gespeichert werden.

Zunächst bilden also mindestens zwei Holzwerkstoffplatten, insbesondere mehrere Holzwerkstoffplatten ein Plattenpaket. Die üblicher Weise horizontal aufeinanderliegenden Platten definieren eine horizontale Richtung und eine vertikale Richtung. In einem Plattenpaket befinden sich in der Regel 10 bis 30 Platten, je nach ihrer Dicke und je nach Bestellumfang. Denn die Holzwerkstoffplatten können unterschiedliche Dicken und/oder unterschiedliche Qualitäten aufweisen. Die Holzwerkstoffplatten werden in der Regel für den Transport in Plattenpakete gebündelt und zu einer transportablen Einheit miteinander durch Riemen und/oder andere Verpackungsmittel verbunden.

Dann wird zumindest ein digitales Bild von einem Teil des Plattenpakets mit Abschnitten der Seitenkanten der übereinander angeordneten Holzwerkstoffplatten aufgenommen. Dieses mindestens eine digitale Bild wird dann einer Auswertung unterzogen, indem aus dem digitalen Bild Bildausschnitte mit den Abschnitten der einzelnen Seitenkanten ermittelt werden. Für jeden Bildausschnitt wird aus dem digitalen Bildausschnitt durch Anwendung von mindestens einem Algorithmus ein Vergleichsdatensatz anhand der Struktur der Holzwerkstoffelemente ermittelt.

Für die spätere Verwendung der Vergleichsdatensätze ist es erforderlich, dass für ein Ermitteln von Prüfdatensätzen in einem späteren Zeitpunkt die Position des für das Erstellen des Vergleichsdatensatz verwendeten Abschnitts der Seitenkante der Holzwerkstoffplatte bekannt ist bzw. erkennbar am Plattenpaket ist. Dieser Abschnitt könnte beispielsweise durch die Art der Verpackung kenntlich gemacht werden. Insbesondere Haltegurte, die für das Fixieren der Holzwerkstoffplatten verwendet werden, können eine Markierung zur Bestimmung des relevanten Abschnitts darstellen. Alternativ kann auch von allen Seiten jeweils ein digitales Bild aufgenommen werden, wodurch sich der Aufwand jedoch deutlich erhöht.

Die Ermittlung der Struktur erfolgt dabei auf der Basis der Geometrie und/oder der Verteilung der Holzwerkstoffelemente. Die Struktur wird hierbei beispielsweise durch die Formeigenschaften der Seitenkante wie beispielsweise die Eigenschaften der Holzwerkstoffelemente bestimmt, also deren Größe, deren individuelle und/oder gemeinsame Ausrichtung, die Variabilität der Größe, die Existenz und/oder Anzahl verschiedener Holzwerkstoffelementtypen, die Ausmaße der Abstände zwischen Holzwerkstoffelementen oder das Vorliegen und die Verteilung von nicht gefüllten Freiräumen zwischen den Holzwerkstoffelementen. Dabei können auch nicht nur einzelne Holzwerkstoffelemente unterschieden werden, vielmehr kann das Gesamtbild der Seitenkante als Struktur betrachtet werden. Alternativ oder zusätzlich zu den Formeigenschaften kann die Struktur auch durch die Farbe und/oder die Helligkeit der Seitenkante bestimmt sein. Dies kann die Grundfarbe und Grundhelligkeit der Seitenkante sein, aber auch die Variabilität der Farbe und Helligkeit, die Farbe der Holzwerkstoffelemente oder der Zusatzstoffe.

Dabei wird ausgenutzt, dass die sichtbare Struktur des Holzwerkstoffes, insbesondere an einer Seitenkante, bestehend aus den Holzwerkstoffelementen und optional auch aus den diese verbindenden Harzen und gegebenenfalls Zusatzstoffen, sowohl durch verschiedene Ausgangsmaterialien als auch durch zufällige, im Herstellungsprozess nicht kontrollierte Variationen der Beschaffenheit des Holzwerkstoffes so verschiedenartig aufgebaut ist, dass diese Struktur als Merkmal zum Identifizieren herangezogen werden kann. Somit können ohne jedes Aufbringen von Etiketten oder Aufdrucken von Codes oder anderen Kennzeichnungen einzelne Abschnitte der Seitenkanten an sich als Identifizierungsmerkmal genutzt werden.

Der Vergleichsdatensatz wird bevorzugt als sogenannter Hashwert ermittelt. Dabei weist der Hashwert nach der Verarbeitung des digitalen Bildausschnitts dem Inhalt des Bildausschnitts einen eindeutigen alphanumerischen Wert zu. Anhand des alphanumerischen Wertes können zu einem späteren Zeitpunkt Suchalgorithmen den Inhalt eines weiteren digitalen Bildes identifizieren.

Weiterhin wird der Vergleichsdatensatz jeder Holzwerkstoffplatte gespeichert und mindestens eine Information zu der jeweiligen Holzwerkstoffplatte und zu dem jeweiligen Plattenpaket wird mit dem Vergleichsdatensatz jeder Holzwerkstoffplatte verknüpft und in einer Datenbank gespeichert. Beispielsweise kann als Information eine Identifikationsnummer des Plattenpakets gespeichert werden, so dass über die Identifizierung der Holzwerkstoffplatte auch das Plattenpaket identifiziert werden kann. Und über die Identifizierung des Plattenpakets können dann die anderen Holzwerkstoffplatten angegeben werden, die ebenfalls in dem Plattenpaket gestapelt sind. Denn während der Produktion der Holzwerkstoffplatten ist bereits festgelegt, in welchem Plattenpaket diese gestapelt werden.

Weitere Informationen zur Charakterisierung der Holzwerkstoffplatte können sein:
- Materialinformation zur Holzart bzw. zu Holzarten der eingesetzten Holzwerkstoffe,
- Materialinformationen zur Rezeptur der verwendeten Bindemittel und weiterer Additive,
- technische Datenblätter und Laborprotokolle,
- Herstellungsparameter wie Temperatur, Druck und Zeitverlauf des Pressvorgangs,
- Produktionsdatum, Produktionszeit, Produktionsanlage und Produktionsstandort,
- Abmessungen bzw. Format, insbesondere Außenabmessungen und Schichtdicken,
- Art einer aufgebrachten Beschichtung bzw. eines Dekors,
- Zertifizierungen der Platte, beispielsweis eine Zertifizierung für das verwendete Holz nach den Normen FSC und PEFC für nachhaltige Waldwirtschaft und entsprechende ISO-Normen,
- Zertifizierungen der Platte in Bezug auf die Abgabe von flüchtigen Stoffen nach TSCA Title VI, CARB2 und CE,
- Lagerorte und Lagerzeiten sowie Transportwege und Transportzeiten,
- Berechtigungsinformationen für ein nachträgliches Auslesen der Datensätze

Durch Auswerten eines digitalen Bildes von einem Plattenpaket werden die im Plattenpaket enthaltenen Holzwerkstoffplatten identifiziert. Aus den Bildausschnitten werden die einzelnen Kantenabschnitte separiert und für die eindeutige Identifikation der im Bild enthaltenen Holzwerkstoffplatten genutzt. Es genügt also ein digitales Bild eines ganzen Plattenpakets oder eines Bereichs eines Plattenpakets anzufertigen und aus diesem für jede einzelne Platte einen Hashwert zu generieren.

Sollen zu einem späteren Zeitpunkt Informationen zu einer Holzwerkstoffplatte ermittelt werden, kann über ein digitales Bild von deren Seitenkante bzw. deren Seitenkantenabschnitt ein zugeordneter Prüfdatensatz, also beispielsweise ein entsprechender Hashwert ermittelt werden. Anhand des Prüfdatensatzes können dann die jeweils mit der identifizierten Holzwerkstoffplatte verknüpften Daten aus der Datenbank bereitgestellt und abgerufen werden.

Bei einer bevorzugten Ausgestaltung des Verfahrens werden die Bildausschnitte mit den Abschnitten der horizontal verlaufenden Seitenkanten der vertikal übereinander angeordneten Holzwerkstoffplatten im digitalen Bild mittels horizontal verlaufender Unterschiede in den Bilddaten erkannt.

Die Trennung der einzelnen Lagen der Holzwerkstoffplatten im digitalen Bild kann also durch optisch wahrnehmbare Unterschiede, die über die jeweilige Plattendicke vorliegen, bewerkstelligt werden. Bei Spanplatten ergeben sich solche optisch wahrnehmbaren Unterschiede durch deren verschiedene Porosität in Mittel- und Deckschichten. Die Separierung könnte aber auch anhand anderer Eigenschaften durchgeführt werden, wie beispielsweise durch ein Ermitteln der unterschiedlichen Dichten der Mittel- und Deckschichten und auch durch ein optisches Erfassen der Querschnitte von Beschichtungen, die an den Plattenoberseiten und Plattenunterunterseiten angebracht sind. Die einzelnen Holzwerkstoffplatten können dabei dicht aneinander liegen oder voneinander beabstandet angeordnet sein.

Für einen Transport größerer Mengen von Holzwerkstoffplatten sind mindestens zwei Plattenpakete übereinander angeordnet und bilden einen Plattenstapel. Mehrere Plattenpakete lassen sich demnach übereinander zu Plattenstapeln anordnen, die als Ganzes bewegt werden können, um diese beispielsweise aus einem Lager in einen Lastkraftwagen oder einen Eisenbahnwaggon zu transportieren. Bei dem beschriebenen Verfahren wird die Information zur Identifizierung des Plattenstapels mit dem Vergleichsdatensatz der Holzwerkstoffplatten verknüpft und zusätzlich in der Datenbank gespeichert.

In weiter bevorzugter Weise wird das digitale Bild des Plattenpakets oder des Plattenstapels unmittelbar vor dem Verpacken des Plattenpakets oder des Plattenstapels aufgenommen. Zu diesem Zeitpunkt liegen die relevanten Informationen zu den einzelnen Holzwerkstoffplatten und auch jene Informationen, die für die weitere Manipulation des Plattenpakets von Bedeutung sind, aus dem MES-System (Manufacturing Execution System) des Plattenherstellers vor. Jede Holzwerkstoffplatte kann damit mit Daten über die Holzwerkstoffplatte selbst und mit Daten zum Plattenpaket, in dem sie weiter transportiert wird, verknüpft werden.

Durch die Möglichkeit der Separierung der Holzwerkstoffplatten eines Plattenpakets bzw. Plattenstapels kann mit dem digitalen Bild die Anzahl der Holzwerkstoffplatten je Plattenpaket ermittelt werden, die dann zum Überprüfen der vorgegebenen Anzahl genutzt werden kann. Stimmt die ermittelte Anzahl nicht mit der vorgegebenen Anzahl im Plattenpaket überein, bestehen unplausible Verhältnisse, die einen manuellen Eingriff erfordern. Somit kann auch nach dem Verpacken des Plattenpakets oder eines Plattenstapels ein Plausibilitätscheck durchgeführt werden.

Die oben aufgezeigte Aufgabe wird auch durch ein Verfahren zum Identifizieren einer Holzwerkstoffplatte gelöst,
- bei dem mindestens zwei Holzwerkstoffplatten, insbesondere mehrere Holzwerkstoffplatten ein Plattenpaket bilden,
- bei dem zumindest ein digitales Bild von einem Teil des Plattenpakets mit Abschnitten der Seitenkanten der Holzwerkstoffplatten aufgenommen wird,
- bei dem aus dem digitalen Bild mindestens ein Bildausschnitt mit dem Abschnitt von einer Seitenkante von mindestens einer Holzwerkstoffplatte ermittelt wird,
- bei dem für den Bildausschnitt anhand der Struktur der Holzwerkstoffelemente, ein Prüfdatensatz ermittelt wird,
- bei dem der Prüfdatensatz mit den in einer Datenbank gespeicherten Vergleichsdatensätzen verglichen wird und
- bei dem dann, wenn ein Vergleichsdatensatz mit dem Prüfdatensatz übereinstimmt, die zugeordnete Holzwerkstoffplatte identifiziert wird.

Die Struktur der Holzwerkstoffelemente wird in gleicher Weise wie beim Erzeugen des Vergleichsdatensatzes auf der Basis der Geometrie und/oder der Verteilung der Holzwerkstoffelemente analysiert.

Zudem ist der Prüfdatensatz erneut in bevorzugter Weise ein Hashwert.

Das beschriebene Verfahren findet bevorzugt nach einer Auslieferung der Holzwerkstoffplatten bzw. der Plattenpakete bei einem Zwischenhändler oder einem Endkunden statt. Dazu wird dann vorzugsweise eine mobile Kameraeinrichtung, insbesondere ein Smartphone eingesetzt, wobei das aufgenommene digitale Bild dem Nutzer direkt angezeigt wird, um ausgewertet zu werden.

In einer bevorzugten Ausgestaltung des Verfahrens wird der Abstand zwischen einer Kameraeinrichtung und dem Plattenpaket bestimmt, wird aus dem Abstand und aus den optischen Eigenschaften der Kameraeinrichtung die Dicke mindestens einer Holzwerkstoffplatte bestimmt und wird die Dicke der Holzwerkstoffplatte als Auswahlkriterium für den Vergleichsschritt mit den Vergleichsdatensätzen verwendet.

Die Eigenschaften der Kameraeinrichtung sind unter anderem die Brennweite, die Größe des optischen Sensors und die Größe der Pixel des Sensors, aus denen sich bei einer gegebenen Entfernung zu einem Objekt aus den Pixelwerten des digitalen Bildes die Abmessung, hier die Dicke einer aufgenommenen Holzwerkstoffplatte bestimmen lässt.

Für eine Bestimmung der Entfernung kann ein LIDAR-Sensor (Light Detection And Ranging) zusammen mit der Kameraeinrichtung verwendet, um den Abstand zwischen der Kameraeinrichtung und der Holzwerkstoffplatte zu messen.

Durch das Bestimmen der Dicke der Holzwerkstoffplatte wird der Rechenaufwand für den Vergleich des Prüfdatensatzes mit den in einer Datenbank gespeicherten Vergleichsdatensätze verringert, weil die Suche auf die Vergleichsdatensätze auf Holzwerkstoffplatten mit der bereits bestimmten Dicke reduziert werden kann.

In bevorzugter Weise wird das zugeordnete Plattenpaket zusammen mit der Holzwerkstoffplatte identifiziert. Damit können auch alle anderen Holzwerkstoffplatten angegeben und über deren mit gespeicherte Position innerhalb des Plattenpakets auch identifiziert werden.

Zudem ist es möglich, dass mehrere Holzwerkstoffplatten, insbesondere alle erkennbaren Holzwerkstoffplatten des mindestens einen Plattenpakets identifiziert werden. Dadurch werden diese Holzwerkstoffplatten unmittelbar identifiziert und nicht über den Umweg der gespeicherten Zugehörigkeit zum Plattenpaket.

Des Weiteren kann dann, wenn mindestens zwei Plattenpakete einen Plattenstapel bilden, auch der Plattenstapel mittels der Identifizierung einer der Holzwerkstoffplatten eines der Plattenpakete identifiziert werden. Denn zu jeder Holzwerkstoffplatte kann mit dem Vergleichsdatensatz auch die Information gespeichert werden, in welchem Plattenstapel die Holzwerkstoffplatte enthalten ist.

Nach der Verpackung des Plattenpakets oder Plattenstapels sind die Seitenkanten der Holzwerkstoffplatten in der Regel für einen Teil der Holzwerkstoffplatten zumindest teilweise verdeckt. Durch die Kenntnis des Aufbaus des Plattenpakets bzw. des Plattenstapels reicht es dann aber aus, den Prüfdatensatz bzw. den Hashwert einer einzelnen Holzwerkstoffplatte des gesamten Plattenstapels zu ermitteln, um feststellen zu können, welche weiteren Holzwerkstoffplatten in diesem Stapel vorhanden sind.

Dadurch wird kein Paketzettel mehr für jedes Plattenpaket benötigt, der dauerhaft am Plattenpaket angebracht werden muss. Gleichzeitig wird das Problem verlorengegangener Paketzettel gelöst und es ist auch möglich, die Identität eines Plattenpakets automatisiert zu ermitteln. Das Feststellen der Identität des Plattenpakets ist dagegen bei Paketzetteln in der Regel aufwändig, da diese nicht immer automatisiert lesbar sind oder oft - je nach Kundenwunsch - an unterschiedlichen Stellen der Plattenpakete angebracht sind.

Dies ist insbesondere bei automatisierten Lager- und Manipulationssystemen oder auch für das Bedienpersonal von Förderfahrzeugen von Vorteil. Das Bedienpersonal kann sich dann stärker auf die sichere Manipulation der schweren Plattenstapel konzentrieren. Dazu können die Manipulationsfahrzeuge mit mindestens einer geeigneten Kamera ausgerüstet sein, die die bekannte Stelle bzw. Ecke des Plattenpakets digital aufnimmt und die aufgenommenen digitalen Bilder einer Auswertung zuführt.

Eine automatisierte Paketerkennung kann auch dazu genutzt werden, Entwicklungen, die unter der Bezeichnung "Internet of Things" oder "IoT" verstanden werden, umzusetzen. So können automatisiert Informationen zur Verfügung gestellt werden, die beispielsweise die genaue Art und Beschaffenheit der für das Paket vorzusehenden Verpackung umfassen. In der Folge können damit im weiteren Ablauf Kontrollsysteme eingesetzt werden, die automatisiert feststellen, ob die ausgeführte Verpackung der vorgesehenen Verpackungskonfiguration entspricht. Für den Verarbeiter von Holzwerkstoffplatten können Informationen zu der Art von Holzwerkstoffplatten, die in dem betreffenden Paket vorhanden sind, zur Verfügung gestellt werden oder beispielsweise auch, ob eine und falls welche Holzwerkstoffplatte einen Qualitätsmangel aufweist, der bei ihrer Verarbeitung zu berücksichtigen ist.

Neben der Separierung von Holzwerkstoffplatten eines Stapels ist es darüber hinaus möglich, auch verschiedene Stapel, die sich auf einem Bild befinden, voneinander zu separieren.

Zur Kontrolle der Verladung von Plattenstapeln auf einem LKW oder Waggon ist es daher ausreichend, ein Bild anzufertigen, auf dem zumindest von jedem Stapel ein Abschnitt einer Seitenkante sichtbar ist, der für das Erstellen von Prüfdatensätzen verwendet wurde. Bei ausreichender Auflösung des Bildes kann festgestellt werden, wie viele Stapel verladen sind, welche Stapel verladen und damit auch welche Holzwerkstoffplatten in den Stapeln und damit auf dem LKW oder Waggon verladen sind. Diese Informationen können in der Folge zur automatisierten Lieferscheinausfertigung beim Holzwerkstoffhersteller oder zur automatisierten Wareneingangserfassung beim Verarbeiter der Holzwerkstoffplatten genutzt werden.

Um den Bestand an Holzwerkstoffplatten in einem Lager kontrollieren zu können, genügt es zudem, von jedem im Lager befindlichen Plattenstapel ein Bild anzufertigen. Eine Aufstellung aller Paketnummern der im Lager befindlichen Pakete anzufertigen, ist nicht dann nicht mehr erforderlich.

Bei einer weiteren Ausgestaltung des beschriebenen Verfahrens wird der Abstand zwischen einer Kameraeinrichtung und dem Plattenpaket bestimmt wird, wird aus dem Abstand und aus den optischen Eigenschaften der Kameraeinrichtung die Dicke mindestens einer Holzwerkstoffplatte bestimmt und wird die Dicke der Holzwerkstoffplatte als Auswahlkriterium für den Vergleichsschritt mit den Vergleichsdatensätzen verwendet.

Im Folgenden wird die Erfindung anhand von Ausführungsbeispielen mit Bezug auf die Zeichnung erläutert. In der Zeichnung zeigen
- Fig. 1-4: eine schematische Darstellung und Tabellen für ein Ausführungsbeispiel eines erfindungsgemäßen Verfahrens mit Anwendung an einem Abschnitt einer Seitenkante einer Holzwerkstoffplatte und Auswertung geometrischer Größen der Spanverteilung,
- Fig. 5: eine schematische Darstellung für ein weiteres Ausführungsbeispiel eines erfindungsgemäßen Verfahrens mit Anwendung von vier Abschnitten einer Seitenkante einer Holzwerkstoffplatte,
- Fig. 6: eine schematische Darstellung für ein weiteres Ausführungsbeispiel eines erfindungsgemäßen Verfahrens mit Anwendung an einem Abschnitt an einer Seitenkante einer Holzwerkstoffplatte,
- Fig. 7-9: Darstellungen zur Erläuterung eines erfindungsgemäßen Verfahrens zum Erzeugen eines Datensatzes zum Identifizieren von Holzwerkstoffplatten und
- Fig. 10-12: Darstellungen zur Erläuterung eines erfindungsgemäßen Verfahrens zum Identifizieren einer Holzwerkstoffplatte.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

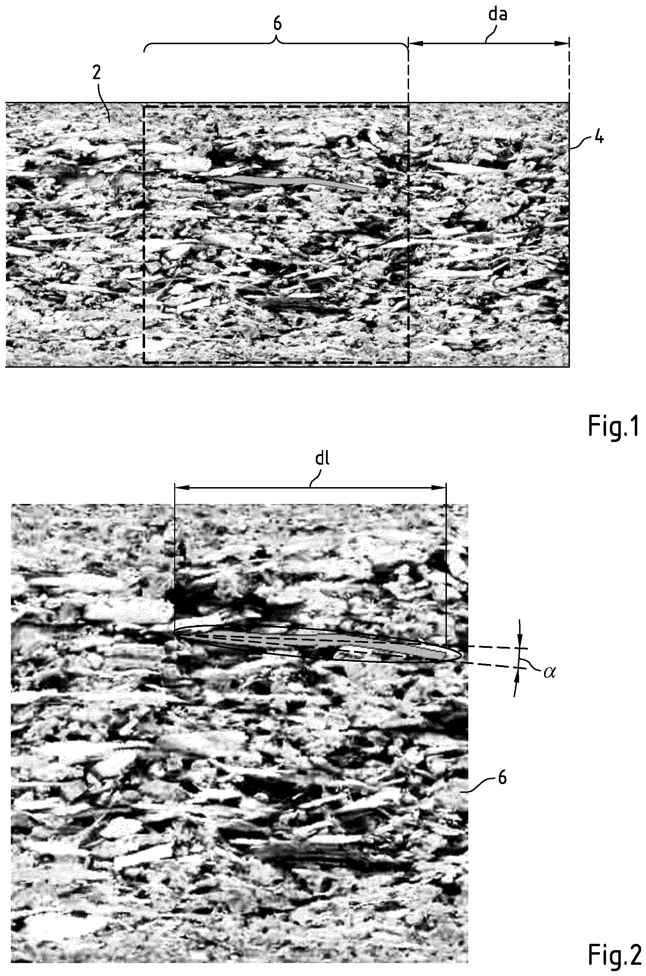

Zunächst wird das aus der WO 2022/223563 A1 bekannte Verfahren zum Erzeugen von Vergleichsdatensätzen und Prüfdatensätzen anhand der Fig. 1 bis 6 erläutert, bevor danach Ausgestaltungen der erfindungsgemäßen Verfahren erläutert werden.

In den Fig. 1 bis 4 ist ein erstes Ausführungsbeispiel eines Verfahrens zum Identifizieren von Holzwerkstoffplatten dargestellt.

In Fig. 1 ist eine Photographie eines Stückes einer Seitenkante 2 einer Holzwerkstoffplatte in einer Seitenansicht dargestellt. Am rechten Rand der Ansicht ist eine rechtwinklige Ecke 4 angeordnet, die als Referenz für ein Maß "da" verwendet werden kann, um die Position eines Abschnitts 6 festzulegen. Der Abschnitt 6 ist mit einer gestrichelten Hilfslinie gezeigt, die jedoch nicht auf der Seitenkante selbst angebracht ist. Die Seitenkante 2 ist nicht weiter bedruckt oder sonst markiert. Fig. 2 zeigt den Abschnitt 6 in einer separaten Ansicht

In einem weiteren Schritt des Verfahrens wird nun ein digitales Bild als Vergleichsbild für den Abschnitt 6 der Seitenkante 2 mit einer nicht dargestellten Kamera aufgenommen und ausgewertet. Dazu wird eine herkömmliche Bildanalyse-Software benutzt wie beispielsweise OpenCV, scikit-image, Google Cloud Vision API, Microsoft Computer Vision API, vlfeat, dlib, Matlab Image Processing Toolbox, etc. und eine Anzahl von einzelnen Holzwerkstoffspänen erkannt. Die Umrisse der erkannten Späne werden zu einem Teil von der Software anhand vorgegebener Kriterien wie Größe oder Fläche bestimmt. Dies ist exemplarisch für einen langen Span in den Fig. 1 und 2 gezeigt, dessen Fläche durch eine konstante graue Einfärbung markiert ist.

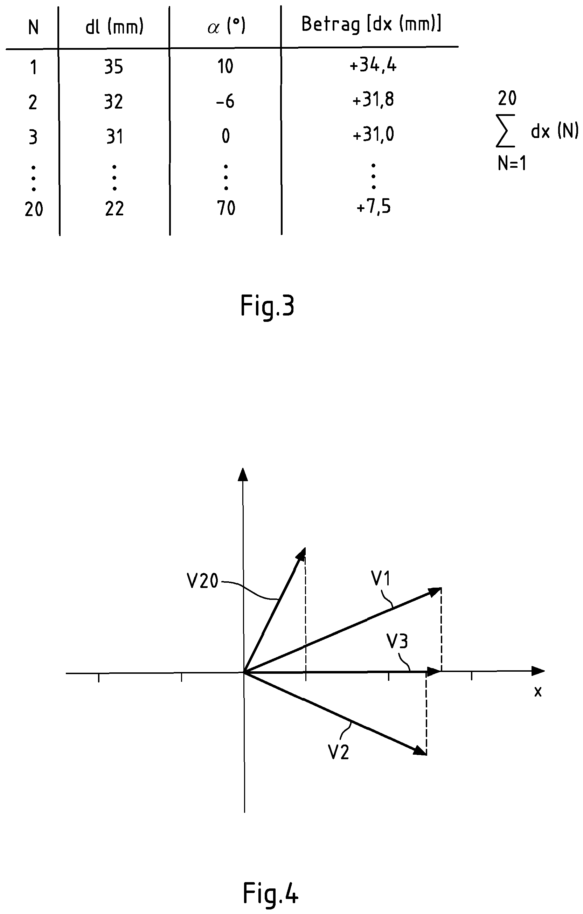

Wie in Fig. 2 für den ausgewählten Span gezeigt ist, werden die erkannten Späne nach Länge dl und Winkel α der Ausrichtung der Späne in Bezug auf die Erstreckungsrichtung (horizontal in Fig. 2) vermessen, die entsprechenden Daten für N=20 Späne sind in Fig. 3 als Tabelle zum Teil aufgelistet.

Fig. 4 zeigt die graphische Darstellung der Daten nach der Tabelle in Fig. 3, wobei die Länge dl in Richtung der x-Achse und der Winkel α relativ zur x-Achse als Vektoren eingezeichnet sind. Die entsprechenden Vektoren v₁, v₂, v₃ und v₂₀ sind in Fig. 4 eingezeichnet. Durch eine Projektion der Vektoren auf die x-Achse durch Berücksichtigung des Kosinuswertes zum Winkel α und Bildung des Absolutwertes (Betrag) ergeben sich dann die Werte Betrag dx in der rechten Spalte der Tabelle in Fig. 3.

Ein Vorteil der Betragsbildung bei den Werten dx(N) besteht darin, dass der Wert der gleiche ist, unabhängig von der Ausrichtung der Holzwerkstoffplatte bei der Aufnahme des Bildes.

Bildet man anschließend die Summe der Beträge dx über N=1 bis 20, so ergibt sich ein spezifischer Wert für den Abschnitt 6, der das Identifizieren der Holzwerkstoffplatte ermöglicht. Somit wird bei dem dargestellten und beschriebenen Verfahren ein Vergleichsdatensatz, hier als Summe der Werte N=1 bis 20 über die Beträge dx(N) sowie die Einzelwerte dx(N) aus dem Vergleichsbild anhand der Geometrie der Holzwerkstoffelemente der Späne ermittelt und gespeichert.

Zu mindestens einem späteren Zeitpunkt nach der Herstellung, also beispielsweise noch während der Lagerung im Herstellungsbetrieb, während des Transportes und weiterer Lagerung und/oder während des Einsatzes der Holzwerkstoffplatten für eine Weiterverarbeitung beispielsweise als Möbelplatte, wird erneut ein digitales Bild als Prüfbild für den vorgegebenen Abschnitt der Seitenkante einer Holzwerkstoffplatte aufgenommen.

Das digitale Prüfbild wird einer gleichen Analyse, wie zuvor anhand der Fig. 1 bis 4 erläutert worden ist, unterzogen und ein Prüfdatensatz wird aus dem Prüfbild anhand der Geometrie der Holzwerkstoffelemente (Späne, Fasern) in gleicher Weise wie bei den Vergleichsdatensätzen ermittelt. Anschließend wird der Prüfdatensatz mit den in der Datenbank gespeicherten Vergleichsdatensätzen von der Vielzahl von Holzwerkstoffplatten verglichen. Die geprüfte Holzwerkstoffplatte wird dann bei einer Übereinstimmung des Prüfdatensatzes mit einem Vergleichsdatensatz als die Holzwerkstoffplatte identifiziert, für die der Vergleichsdatensatz erzeugt worden ist.

Das Prüfbild wird dabei bevorzugt mit einer gleichen Kamera und bei gleichen Belichtungssituationen aufgenommen. Das Verfahren kann aber auch so robust gegenüber Schwankungen sein, dass beispielsweise eine fest installierte Kamera nach der Herstellung der Holzwerkstoffplatte das Vergleichsbild aufnimmt, während das Prüfbild zu einem späteren Zeitpunkt mit einer mobilen Kamera, insbesondere auch mittels einer Kamera eines Mobiltelefons, aufgenommen werden kann.

Die Datenbank ist allgemein auf einem Server gespeichert, der über ein lokales Netzwerk der Herstellungsstätte und/oder über das Internet mit den Recheneinheiten für das Erstellen von Vergleichsdatensätzen und den Recheneinheiten für das Erstellen der Prüfdatensätze verbunden ist und einen Datenaustausch ermöglicht.

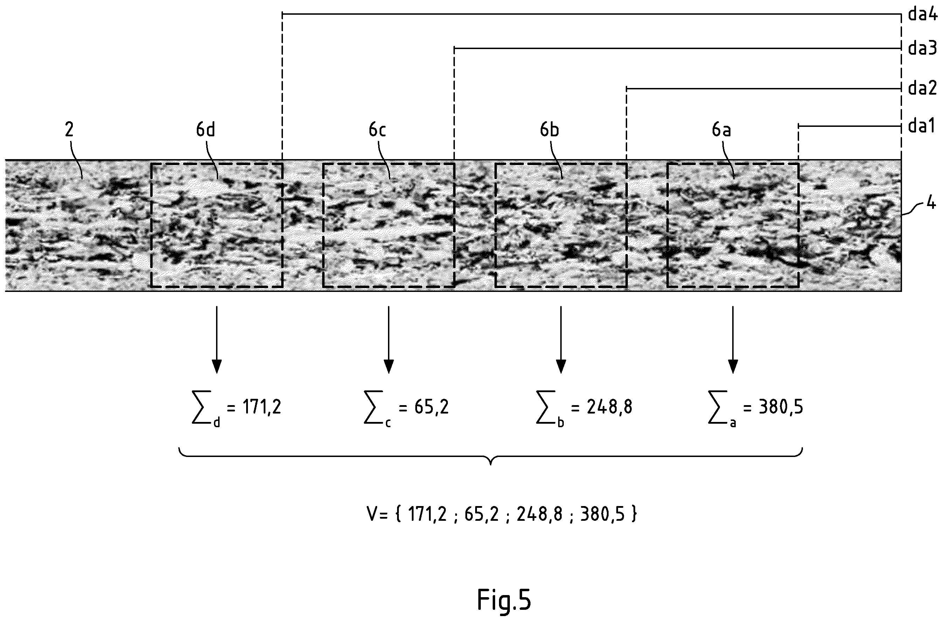

Fig. 5 zeigt ein weiteres Ausführungsbeispiel eines Verfahrens zum Identifizieren von Holzwerkstoffplatten, bei dem im Vergleich zum Beispiel nach den Fig. 1 bis 4 insgesamt vier Abschnitte 6a, 6b, 6c und 6d definiert werden, die mit den Abständen da₁, da₂, das und da₄ von der Ecke 4 beabstandet angeordnet sind.

Anschließend werden Vergleichsbilder für die vier Abschnitte 6a, 6b, 6c und 6d an der Seitenkante 2 aufgenommen und für jeden Abschnitt 6a, 6b, 6c und 6d wird in der zuvor erläuterten Weise eine Summe Σₐ, Σ_{b}, Σ_{c} und Σ_{d} gebildet. Die Zahlenwerte der vier Summen Σₐ, Σ_{b}, Σ_{c} und Σ_{d} werden dann in der Reihenfolge der Abschnitte in einen 4-dimensionalen Vektor V geschrieben, der den Vergleichsdatensatz bildet.

Bei einer späteren Überprüfung einer Holzwerkstoffplatte werden dann in gleicher Weise an einer vorgegebenen Seitenkante die in den vorgegebenen Abschnitten da₁, da₂, das und da₄ positionierten vier Abschnitte photographiert und, wie zuvor beschrieben, ausgewertet und ein Vektor V als Prüfdatensatz gebildet. Dieser Prüfdatensatz wird dann mit den in der Datenbank gespeicherten Vergleichsdatensätzen verglichen. Bei einer Übereinstimmung zwischen dem Prüfdatensatz und einem der Vergleichsdatensätze wird dann die geprüfte Holzwerkstoffplatte als die Holzwerkstoffplatte identifiziert, für die der Vergleichsdatensatz erzeugt worden ist.

Der Vergleichsdatensatz und der Prüfdatensatz sind somit als eine Abfolge von Strukturwerten Σₐ, Σ_{b}, Σ_{c} und Σ_{d} für einen vorgegebenen Anteil der Holzwerkstoffelemente ermittelt worden.

Die digitalen Bilder, also die Vergleichsbilder und die Prüfbilder, können mit herkömmlichen Kameras aufgenommen werden, beispielsweise allgemein CCD-Kameras, Spiegelreflexkameras (DSLR), spiegellose Systemkameras (DSLM) oder Kameras von mobilen Endgeräten wie Mobiltelefone oder Tablets. Ein digitales Bild kann aber auch mit einer für jeden Bildpunkt Spektraldaten ermittelnden spektralen Kamera gewonnen werden. Das Bild kann dabei im RGB-Farbraum mit den Werten für rot (R), grün (G) und blau (B) oder im L*a*b*-Farbraum mit Pixelwerte L*, a*, oder b* für Helligkeit (L*), rot-grün Farbintensität (a*) und blau-gelb Farbintensität (b*) oder in anderen Farbräumen gespeichert sein.

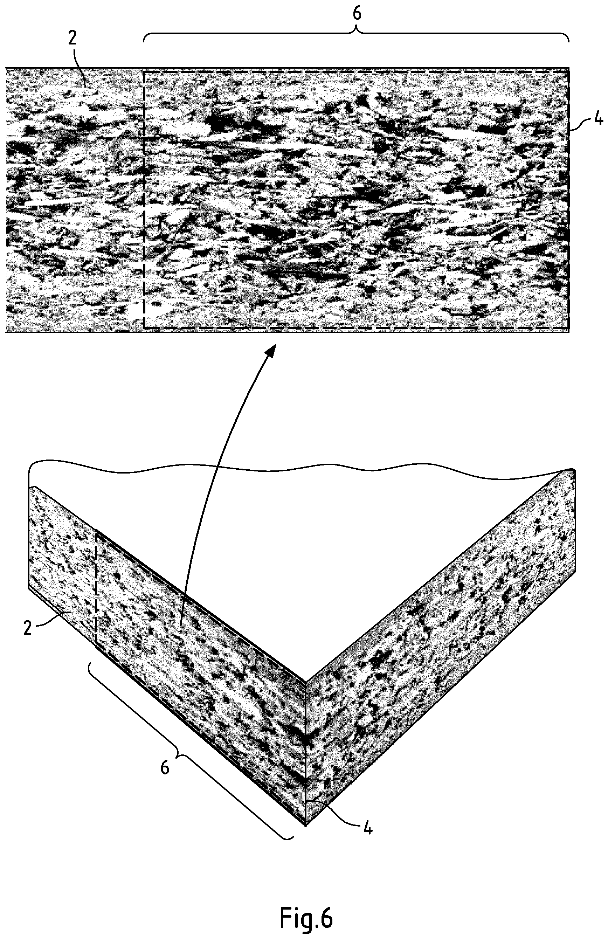

Fig. 6 zeigt ein Ausführungsbeispiel, bei dem die Seitenkante 2 der Holzwerkstoffplatte im Bereich einer Ecke 4 für eine Auswertung der Struktur aufgenommen wird. Die Position der Ecke 4 lässt sich leicht optisch ermitteln und kann daher leicht als Maß für die Begrenzung des auszuwertenden Bereichs der Seitenkanten verwendet werden.

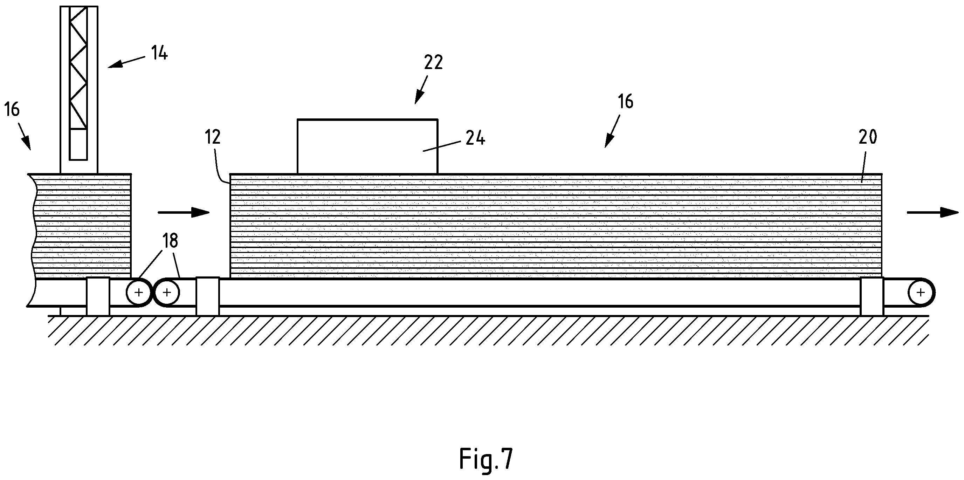

Die Fig. 7 bis 9 zeigen ein Ausführungsbeispiel eines erfindungsgemäßen Verfahrens zum Erzeugen eines Datensatzes zum Identifizieren von Holzwerkstoffplatten.

In Fig. 7 ist ein Teil eines Produktionsbereiches in einem Herstellungswerk für Holzwerkstoffplatten 12 gezeigt. Links von einem Rolltor 14 befindet sich die Produktion der Holzwerkstoffplatten 12, an deren Ende jeweils eine Mehrzahl von Holzwerkstoffplatten 12 zu Plattenpaketen 16 gestapelt werden. Die Plattenpakete 16 werden von einem Transportband 18 befördert, das in mehreren Stufen nacheinander die Plattenpakete 16 in Fig. 7 von links nach rechts transportiert.

Dabei definieren die horizontal aufeinanderliegenden Holzwerkstoffplatten 12 die horizontale Richtung und die vertikale Richtung, die in der nachfolgenden Beschreibung verwendet werden. In den Seitenansichten sind dann die relevanten Seitenkanten 20 der Holzwerkstoffplatten 12 zu erkennen.

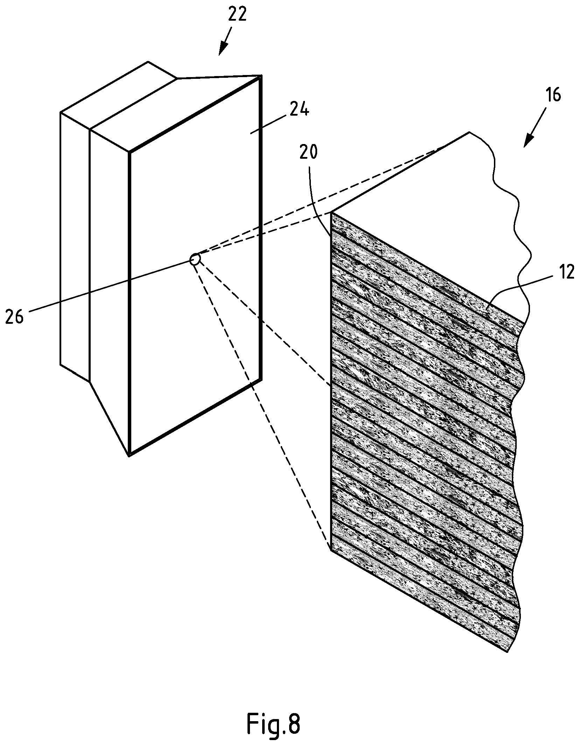

Fig. 7 zeigt ein vollständiges Plattenpaket 16, dessen Bewegung für einen zeitlich kurzen Takt angehalten worden ist. Hinter dem Plattenpaket 16 befindet sich eine Kameraeinrichtung 22, die in Fig. 8 in ihrem Aufbau und in ihrer Position zum Plattenpaket dargestellt ist. Mit dieser Kameraeinrichtung 22 wird zumindest ein digitales Bild von einem Teil des Plattenpakets 16 mit Abschnitten der Seitenkanten 20 der übereinander angeordneten Holzwerkstoffplatten 12 aufgenommen.

Nach dem Erstellen des mindestens einen digitalen Bildes wird der Plattenstapel 16 für eine weitere Bearbeitung in Form des Verpackens und Lagerns weiter transportiert.

Fig. 8 zeigt die Kameraeinrichtung 22 in einer perspektivischen Darstellung mit einem Beleuchtungsschirm 24 und einer mittig angeordneten Digitalkamera 26, die einen optischen Sensor mit einer Auflösung von mindestens 8 Megapixeln, vorzugsweise mit mindestens 12 Megapixeln und weiter bevorzugt mit mindestens 24 Megapixeln aufweist.

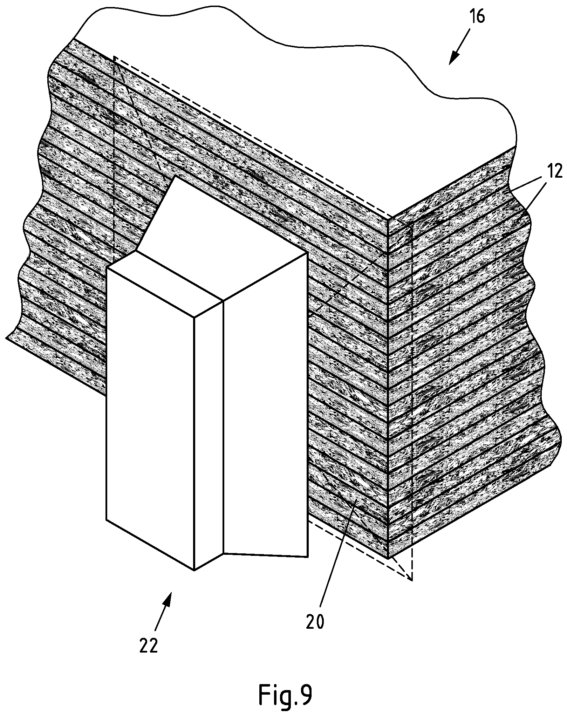

Fig. 9 zeigt die Anordnung aus einer anderen Sicht, in der der von der Digitalkamera 26 erfasste Bereich der Seitenkanten 20 zu erkennen ist.

Die gestrichelten Linien in Fig. 8 und 9 kennzeichnen jeweils den Beobachtungsbereich der Seitenkanten 20 der übereinander gestapelten Holzwerkstoffplatten 12. Ein jeweiliges digitales Bild geht über die gestrichelten Grenzen hinaus, um den abzubildenden Teil des Plattenstapels 16 vollständig zu erfassen.

Mit der Digitalkamera 26 können Plattenstapel 16 von beispielsweise bis zu 150 cm Höhe aufgenommen werden, wobei die aufgenommenen Bilder trotz der dafür notwendigen Entfernung zum Plattenstapel eine ausreichende Auflösung aufweisen, um nachfolgend eine zuverlässige Auswertung zu ermöglichen.

Nach der Aufnahme des digitalen Bildes wird der Plattenstapel 16 in Fig. 7 dann nach rechts weiter transportiert.

Die Bildauswertung erfolgt mit einer in den Figuren nicht dargestellten Auswerteeinheit. In dem digitalen Bild werden mit einer Auswertesoftware Bildausschnitte aus dem digitalen Bild mit den Abschnitten der einzelnen Seitenkanten 20 ermittelt.

Im vorliegenden Ausführungsbeispiel wird für die Identifikation der Holzwerkstoffplatten 12 nur ein Randbereich eines Plattenstapels 16 herangezogen. Dabei ist es vorteilhaft eine Digitalkamera 26 mit einem Bildsensor einzusetzen, der ein großes Höhen-Seitenverhältnis aufweist. Bei gleicher Auflösung der Kameraeinrichtung kann somit über einen schmalen, aber hohen Bereich eine hohe Dichte an Bildinformation zur Berechnung eines Vergleichsdatensatzes in Form eines Hashwertes zur Verfügung gestellt werden.

Des Weiteren hat es sich für die Aufnahme der Plattenstapel 16 als vorteilhaft erwiesen, diese homogen zu beleuchten. Daher wird als Beleuchtungsschirm 24 ein LED-Lichtpaneel mit einer Höhe eingesetzt, die ungefähr der Höhe der zu photographierenden Plattenpakete ist. In der Mitte des Beleuchtungsschirms 24 ist eine Ausnehmung vorgesehen, in der die Digitalkamera 26 positioniert ist.

Mit der Auswertesoftware wird aus dem digitalen Bild ein Vergleichsdatensatz für jeden Bildausschnitt anhand der Struktur der Holzwerkstoffelemente ermittelt, wie es im Zusammenhang mit den Fig. 1 bis 6 zuvor erläutert worden ist. Die Vergleichsdatensätze werden dabei als Hashwerte berechnet.

Jeder Vergleichsdatensatz ist einzigartig für jeden der Bildausschnitte der Holzwerkstoffplatten 12 und wird für jede Holzwerkstoffplatte 12 gespeichert, wobei mindestens je eine Information zu der jeweiligen Holzwerkstoffplatte und zu dem jeweiligen Plattenpaket mit dem Vergleichsdatensatz jeder Holzwerkstoffplatte 12 verknüpft und in einer Datenbank gespeichert werden. Jedes Plattenpaket 16 erhält in der Produktion bereits vor dem Aufeinanderstapeln eine eindeutige Identifikationsnummer, wobei zusätzlich die herzustellenden oder gerade erst hergestellten Holzwerkstoffplatten 12 schon in der Produktion einem spezifischen Plattenpaket 16 zugeordnet werden. Wenn im Datenbanksystem abgespeichert wird, welche Holzwerkstoffplatten 12 ein Plattenpaket 16 bilden, so kann später auf diese Information zurückgegriffen werden.

Die Bildausschnitte mit den auszuwertenden Abschnitten der hprizontal verlaufenden Seitenkanten 20 der vertikal übereinander angeordneten Holzwerkstoffplatten 12 werden im digitalen Bild mittels horizontal verlaufender Unterschiede in den Bilddaten erkannt. Dazu dienen unterschiedliche Dichten und/oder unterschiedliche Porositäten der Mittelschichten und Deckschichten der einzelnen Holzwerkstoffplatten 12 oder auch Beschichtungen an Plattenoberseiten und Plattenunterseiten. Die Auswertesoftware verwendet dabei ein sogenanntes automatisches Freistellwerkzeug, wie es aus Bildbearbeitungssoftware bekannt ist, beispielsweise von Photoshop.

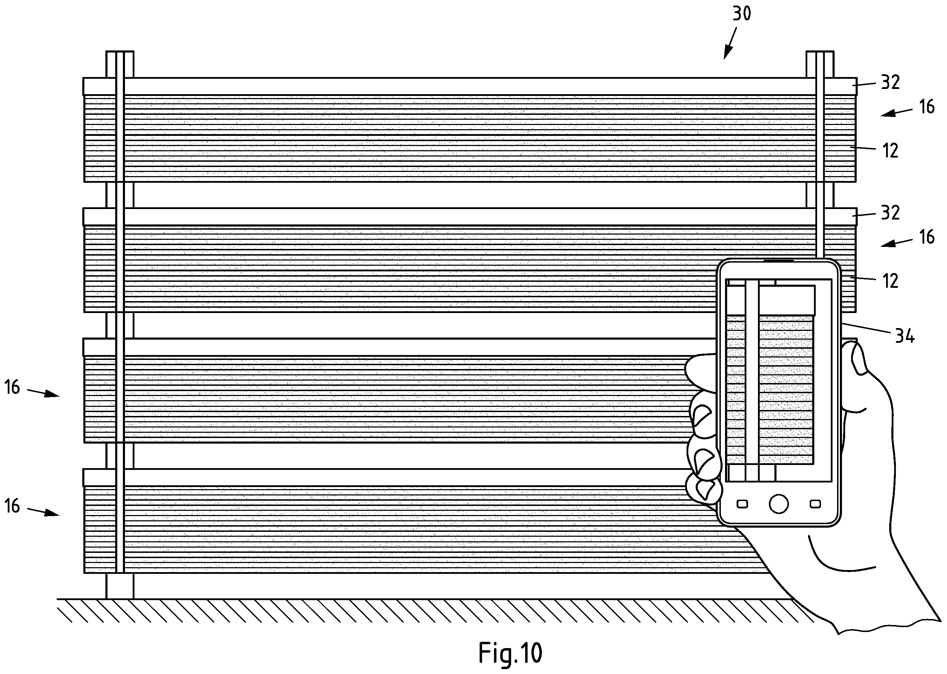

Bei der Produktion von Holzwerkstoffplatten 12 ist es für den Transport üblich, mehrere Plattenpakete 16 übereinander anzuordnen, die somit einen Plattenstapel 30 bilden, der in Fig. 10 gezeigt ist.

In dieser Anwendung des Verfahrens wird die Information zur Identifizierung des Plattenstapels 30, in der Regel eine Identifikationsnummer mit dem Vergleichsdatensatz verknüpft und ebenfalls in der Datenbank gespeichert. Dadurch kann eine einzelne Holzwerkstoffplatte 12 nicht nur einem Plattenpaket 16, sondern auch einem Plattenstapel 30 zugeordnet werden.

In den Fig. 10 bis 12 wird ein erfindungsgemäßes Verfahren zum Identifizieren einer Holzwerkstoffplatte 12 dargestellt.

Fig. 10 zeigt einen Plattenstapel 30 mit insgesamt vier Plattenpaketen 16 jeweils mit einer Mehrzahl von Holzwerkstoffplatten 12. Am oberen Rand jedes Plattenpakets 16 ist ein horizontaler Abschnitt einer Verpackung 32 zu erkennen, der mehrere Holzwerkstoffplatten 12 seitlich abdeckt.

Dargestellt ist auch ein Mobiltelefon 34 eines Benutzers, mit dessen Kamera ein digitales Bild von einem Teil eines der Plattenpakete 16 mit Abschnitten der Seitenkanten 20 der übereinander angeordneten Holzwerkstoffplatten 12 aufgenommen wird. Mittels eines Programms, das auf dem Mobiltelefon 34 installiert ist, wird die Separation der Holzwerkstoffplatten 12 des Plattenpakets 16 durchgeführt. Das Programm nutzt dafür die auch mit freiem Auge gut sichtbaren Unterschiede des Schichtaufbaus der einzelnen Holzwerkstoffplatten 12. Durch eine entsprechende Bildanalysesoftware und eine Bildbearbeitungssoftware lassen sich damit die Grenzflächen zwischen den einzelnen Holzwerkstoffplatten 12 hervorheben.

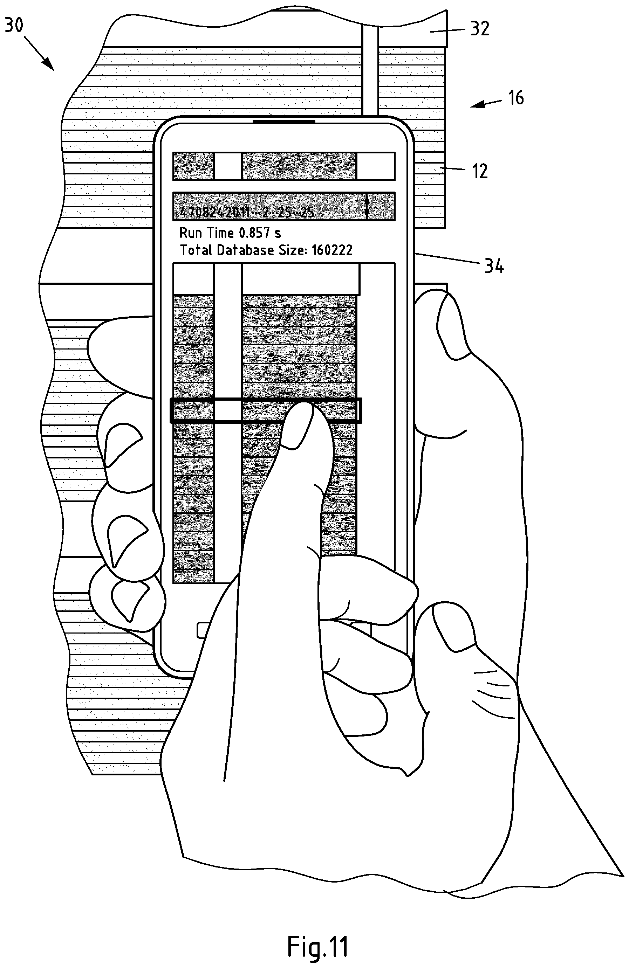

In Fig. 11 ist dargestellt, wie der Benutzer eine der aufgenommenen Holzwerkstoffplatten auswählt, so dass aus dem digitalen Bild ein Abschnitt von einer Seitenkante 20 einer Holzwerkstoffplatte 12 ermittelt und somit der interessierende Bildausschnitt definiert wird.

Für diesen Bildausschnitt wird dann in der oben beschriebenen Weise anhand der Struktur der Holzwerkstoffelemente, ein Prüfdatensatz, insbesondere ein Hashwert ermittelt. Der Prüfdatensatz wird dann mit den in der Datenbank gespeicherten Vergleichsdatensätzen verglichen und dann, wenn ein Vergleichsdatensatz mit dem Prüfdatensatz übereinstimmt, wird die dem Bildausschnitt zugeordnete Holzwerkstoffplatte identifiziert.

Durch Auswahl einer Holzwerkstoffplatte 12 mittels Touchfunktion auf dem Mobiltelefon wird diese somit markiert und es wird eine Verbindung mit der Datenbank, in der sämtliche Plattendaten mit Hashwerten sämtlicher Holzwerkstoffplatten hinterlegt sind, hergestellt. Je nach Bedarf können dann bestimmte Daten zur ausgewählten Holzwerkstoffplatte 12, dem Plattenpaket 16 und/oder dem Plattenstapel 30 rückgemeldet werden.

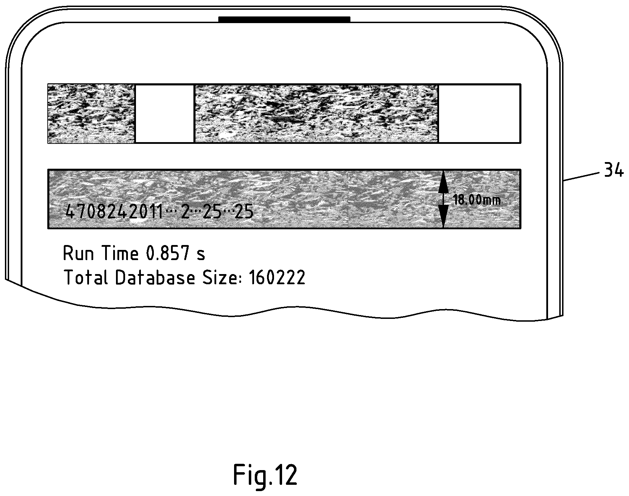

Im oberen Bereich des Displays des in Fig. 11 dargestellten Mobiltelefons 34, der in Fig. 12 vergrößert dargestellt wird, werden dann Daten der identifizierten Holzwerkstoffplatte 12 angezeigt. Vorliegend sind dieses die Stapelnummer 4708242011***2***25***25 und die Dicke der Platte 18.00 mm. Zusätzlich werden Daten zum Ablauf der Datenbankabfrage angezeigt.

Somit wird das zugeordnete Plattenpaket 16 zusammen mit der Holzwerkstoffplatte 12 identifiziert, so dass zudem alle Holzwerkstoffplatten 12 des Plattenpakets 16 identifiziert werden. Dazu werden die Holzwerkstoffplatten 12 des zugehörigen Plattenpakets 16 ermittelt. Somit können auch Holzwerkstoffplatten 12 identifiziert werden, die durch den horizontalen Abschnitt der Verpackung 32 verdeckt sind.

Die Kamera des Mobiltelefons 34 kann zudem auch einen integrierten LIDAR-Sensor aufweisen, wobei LIDAR für LIght Detection And Raging steht. Mit dem LIDAR-Sensor ist es möglich die Entfernung zwischen der Kamera und der Seitenkante 2 zu bestimmen. Daraus lässt sich die Dicke der Holzwerkstoffplatte errechnen. Das hat den Vorteil, dass der ermittelte Hashwert nur mit den in der Datenbank vorgehaltenen Hashwerten der entsprechenden Plattendicke verglichen werden muss. Damit kann die für den Vergleich der Hashwerte erforderliche Zeit reduziert werden.

## Patentansprüche

1. Verfahren zum Erzeugen eines Datensatzes zum Identifizieren von Holzwerkstoffplatten,
- bei dem mindestens zwei Holzwerkstoffplatten, insbesondere mehrere Holzwerkstoffplatten ein Plattenpaket bilden,
- bei dem zumindest ein digitales Bild von einem Teil des Plattenpakets mit Abschnitten der Seitenkanten der Holzwerkstoffplatten aufgenommen wird,
- bei dem Bildausschnitte aus dem digitalen Bild mit den Abschnitten der einzelnen Seitenkanten ermittelt werden,
- bei dem ein Vergleichsdatensatz für jeden Bildausschnitt anhand der Struktur der Holzwerkstoffelemente ermittelt wird,
- bei dem der Vergleichsdatensatz jeder Holzwerkstoffplatte gespeichert wird und
- bei dem mindestens eine Information zu der jeweiligen Holzwerkstoffplatte und zu dem jeweiligen Plattenpaket mit dem Vergleichsdatensatz jeder Holzwerkstoffplatte verknüpft und in einer Datenbank gespeichert werden.

2. Verfahren nach Anspruch 1,
bei dem die Bildausschnitte mit den Abschnitten der Seitenkanten der vertikal übereinander angeordneten Holzwerkstoffplatten im digitalen Bild mittels horizontal verlaufender Unterschiede in den Bilddaten erkannt werden.

3. Verfahren nach Anspruch 2,
bei dem als Unterschiede in den Bilddaten verschiedene Porositäten in Mittel- und Deckschichten, unterschiedliche Dichten der Mittel- und Deckschichten und Querschnitte von Beschichtungen, die an den Plattenoberseiten und Plattenunterunterseiten angebracht sind, verwendet werden.

4. Verfahren nach einem der Ansprüche 1 bis 3,
- bei dem mindestens zwei Plattenpakete übereinander angeordnet sind und einen Plattenstapel bilden und
- bei dem die Information zur Identifizierung des Plattenstapels mit dem Vergleichsdatensatz verknüpft und in der Datenbank gespeichert wird.

5. Verfahren nach einem der Ansprüche 1 bis 4,
bei dem das digitale Bild des Plattenpakets oder des Plattenstapels unmittelbar vor dem Verpacken des Plattenpakets oder des Plattenstapels aufgenommen wird.

6. Verfahren zum Identifizieren einer Holzwerkstoffplatte,
- bei dem mindestens zwei Holzwerkstoffplatten, insbesondere mehrere Holzwerkstoffplatten ein Plattenpaket bilden,
- bei dem zumindest ein digitales Bild von einem Teil des Plattenpakets mit Abschnitten der Seitenkanten der Holzwerkstoffplatten aufgenommen wird,
- bei dem aus dem digitalen Bild mindestens ein Bildausschnitt mit dem Abschnitt von einer Seitenkante von mindestens einer Holzwerkstoffplatte ermittelt wird,
- bei dem für den Bildausschnitt anhand der Struktur der Holzwerkstoffelemente, ein Prüfdatensatz ermittelt wird,
- bei dem der Prüfdatensatz mit den in einer Datenbank gespeicherten Vergleichsdatensätzen verglichen wird und
- bei dem dann, wenn ein Vergleichsdatensatz mit dem Prüfdatensatz übereinstimmt, die zugeordnete Holzwerkstoffplatte identifiziert wird.

7. Verfahren nach Anspruch 6,
- bei dem der Abstand zwischen einer Kameraeinrichtung und dem Plattenpaket bestimmt wird,
- bei dem aus dem Abstand und aus den optischen Eigenschaften der Kameraeinrichtung die Dicke mindestens einer Holzwerkstoffplatte bestimmt wird und
- bei dem die Dicke der Holzwerkstoffplatte als Auswahlkriterium für den Vergleichsschritt mit den Vergleichsdatensätzen verwendet wird.

8. Verfahren nach Anspruch 6 oder 7,
bei dem das zugeordnete Plattenpaket zusammen mit der Holzwerkstoffplatte identifiziert wird.

9. Verfahren nach einem der Ansprüche 6 bis 8,
bei dem mehrere Holzwerkstoffplatten, insbesondere alle Holzwerkstoffplatten des mindestens einen Plattenpakets identifiziert werden.

10. Verfahren nach einem der Ansprüche 6 bis 9,
bei dem dann, wenn mindestens zwei Plattenpakete einen Plattenstapel bilden, auch der Plattenstapel identifiziert wird.

## Geänderte Patentansprüche

### Geänderte Patentansprüche gemäss Regel 137(2) EPÜ.

1. Verfahren zum Erzeugen eines Datensatzes zum Identifizieren von Holzwerkstoffplatten, nämlich von Spanplatten, OSB-Platten oder Faserplatten,
- bei dem mindestens zwei Holzwerkstoffplatten, insbesondere mehrere Holzwerkstoffplatten, ein Plattenpaket bilden,
- bei dem zumindest ein digitales Bild von einem Teil des Plattenpakets mit Abschnitten der Seitenkanten der Holzwerkstoffplatten aufgenommen wird,
- bei dem Bildausschnitte aus dem digitalen Bild mit den Abschnitten der einzelnen Seitenkanten ermittelt werden, wobei die Bildausschnitte im digitalen Bild mittels über die jeweilige Plattendicke vorliegenden Unterschieden, insbesondere durch verschiedenen Porositäten in Mittel- und Deckschichten, unterschiedliche Dichten der Mittel- und Deckschichten oder Beschichtungen an Plattenober- oder Plattenunterseiten, in den Bilddaten erkannt werden,
- bei dem ein Vergleichsdatensatz für jeden Bildausschnitt anhand der Struktur der Holzwerkstoffelemente, nämlich der Späne oder Fasern, ermittelt wird,
- bei dem der Vergleichsdatensatz jeder Holzwerkstoffplatte gespeichert wird und
- bei dem mindestens eine Information zu der jeweiligen Holzwerkstoffplatte und zu dem jeweiligen Plattenpaket mit dem Vergleichsdatensatz jeder Holzwerkstoffplatte verknüpft und in einer Datenbank gespeichert werden.

2. Verfahren nach Anspruch 1,
- bei dem mindestens zwei Plattenpakete übereinander angeordnet sind und einen Plattenstapel bilden und
- bei dem die Information zur Identifizierung des Plattenstapels mit dem Vergleichsdatensatz verknüpft und in der Datenbank gespeichert wird.

3. Verfahren nach Anspruch 1 oder 2,
bei dem das digitale Bild des Plattenpakets oder des Plattenstapels unmittelbar vor dem Verpacken des Plattenpakets oder des Plattenstapels aufgenommen wird.

4. Verfahren zum Identifizieren einer Holzwerkstoffplatte, nämlich einer Spanplatte, OSB-Platte oder Faserplatte,
- bei dem mindestens zwei Holzwerkstoffplatten, insbesondere mehrere Holzwerkstoffplatten, ein Plattenpaket bilden,
- bei dem zumindest ein digitales Bild von einem Teil des Plattenpakets mit Abschnitten der Seitenkanten der Holzwerkstoffplatten aufgenommen wird,
- bei dem aus dem digitalen Bild mindestens ein Bildausschnitt mit dem Abschnitt von einer Seitenkante von mindestens einer Holzwerkstoffplatte ermittelt wird, wobei der mindestens eine Bildausschnitt im digitalen Bild mittels Unterschieden des Schichtaufbaus der einzelnen Holzwerkstoffplatten erkannt wird,
- bei dem für den Bildausschnitt anhand der Struktur der Holzwerkstoffelemente, nämlich der Späne oder Fasern, ein Prüfdatensatz ermittelt wird,
- bei dem der Prüfdatensatz mit den in einer Datenbank gespeicherten Vergleichsdatensätzen verglichen wird und
- bei dem dann, wenn ein Vergleichsdatensatz mit dem Prüfdatensatz übereinstimmt, die zugeordnete Holzwerkstoffplatte identifiziert wird.

5. Verfahren nach Anspruch 4,
- bei dem der Abstand zwischen einer Kameraeinrichtung und dem Plattenpaket bestimmt wird,
- bei dem aus dem Abstand und aus den optischen Eigenschaften der Kameraeinrichtung die Dicke mindestens einer Holzwerkstoffplatte bestimmt wird und
- bei dem die Dicke der Holzwerkstoffplatte als Auswahlkriterium für den Vergleichsschritt mit den Vergleichsdatensätzen verwendet wird.

6. Verfahren nach Anspruch 4 oder 5,
bei dem das zugeordnete Plattenpaket zusammen mit der Holzwerkstoffplatte identifiziert wird.

7. Verfahren nach einem der Ansprüche 4 bis 6,
bei dem mehrere Holzwerkstoffplatten, insbesondere alle Holzwerkstoffplatten des mindestens einen Plattenpakets identifiziert werden.

8. Verfahren nach einem der Ansprüche 4 bis 7,
bei dem dann, wenn mindestens zwei Plattenpakete einen Plattenstapel bilden, auch der Plattenstapel identifiziert wird.
